Europäisches Patentamt

European Patent Office

Office européen des brevets

(11) Veröffentlichungsnummer: **0 196 602 B1**

## (12) EUROPÄISCHE PATENTSCHRIFT

(45) Veröffentlichungstag der Patentschrift: **31.07.91**

(21) Anmeldenummer: **86104090.5**

(22) Anmeldetag: **25.03.86**

Die Akte enthält technische Angaben, die nach
dem Eingang der Anmeldung eingereicht wurden
und die nicht in dieser Patentschrift enthalten sind.

(51) Int. Cl.⁵: **C04B 28/02**, C04B 28/04,
C04B 24/04

(54) **Putz-System.**

(30) Priorität: **02.04.85 DE 3512322**

(43) Veröffentlichungstag der Anmeldung:
**08.10.86 Patentblatt 86/41**

(45) Bekanntmachung des Hinweises auf die
Patenterteilung:
**31.07.91 Patentblatt 91/31**

(84) Benannte Vertragsstaaten:
**AT CH DE FR IT LI**

(56) Entgegenhaltungen:
**DE-A- 1 646 495**
**DE-A- 2 215 147**
**FR-A- 2 539 788**
**JP-A-58 041 750**

**Baukatalog 79/80, Quester, 1979, Fritz Quester Baustoffhandel Ges.mbH., Wien, Seite
150**

**H.BACKE "Werkstoffkunde für die Bauindustrie", 14. Auflage, 1977, VEB VERLAG FüR
BAUWESEN, Berlin, Seite 146**

(73) Patentinhaber: **Colfirmit Marthahütte GmbH**

**W-8590 Marktredwitz(DE)**

(72) Erfinder: **Meier, Hermann G.**
**Thölauer Strasse 23**
**W-8590 Marktredwitz(DE)**

(74) Vertreter: **Voigt, Günter, Dipl.-Ing.**
**Patentanwälte Dr.-Ing. Alfred Schulze,**
**Dipl.-Ing. Günter Voigt & Partner Nordring**
**152, Postfach 210104**
**W-8500 Nürnberg 21(DE)**

## Beschreibung

Die Erfindung bezieht sich auf ein Putz-System gemäß Oberbegriff des Anspruchs 1.

Feuchtigkeit spielt im Bauwesen eine ganz entscheidende Rolle. Dies gilt sowohl für die Vermeidung von Bauschäden bei Neubauten wie auch für die Sanierung alter Gebäude, die im Regelfalle, insbesondere im unteren Sockelbereich, unter einer entsprechend starken Durchfeuchtung leiden können. Neben der Feuchtigkeit werden dabei erhebliche Mengen an Schadstoffen, insbesondere an Salzen, mit in das Mauerwerk transportiert. Diese Salze können dann wiederum zu tiefgreifenden Gefügezerstörungen des Mauerwerks führen.

Die Feuchtigkeit kann verschiedene Ursachen haben, nämlich kapillare Wasseraufnahme, Wasseraufnahme durch Sicker- bzw. Hangwasser, hygroskopische Wasseraufnahme, Wasseraufnahme durch Kapillarkondensation oder Wasseraufnahme durch Kondensation.

Solche Wasseraufnahmen treten nicht so fort in Erscheinung, sondern erst dann, wenn es zum Schaden gekommen ist. Mit der Wasseraufnahme verbunden ist gleichzeitig auch ein Transport von bauschädlichen Salzen in das Mauerwerk. Diese wiederum erhöhen dann die hygroskopische Feuchtigkeitsaufnahme, denn ein salzhaltiges Mauerwerk kann gegenüber einem salzfreien Mauerwerk ein Vielfaches an Wasser aus der umgebenden Luft aufnehmen.

Von entscheidender Bedeutung ist auch die Art der Poren im Baustoff. Man unterscheidet durchgehende Poren, Sackporen, geschlossene Poren, Flaschenhalsporen sowie Verzweigungen und Verbindungen.

Bei den vom Mauerwerk aufgenommenen bauschädlichen Salzen sind die Sulfate am häufigsten. Neben den Sulfaten spielen die Chloride und die Nitrate eine wichtige Rolle. Dabei sind Nitrate wesentlich seltener anzutreffen als zum Beispiel Chloride. Nitrate werden hauptsächlich an landwirtschaftlich genutzten Gebäuden nachgewiesen. Sulfate und Chloride dagegen werden an fast allen Gebäuden festgestellt. Eine wesentliche Eigenschaft der bauschädlichen Salze ist ihre leichte Löslichkeit sowie der Wassergehalt und die Aufnahmefähigkeit von Feuchtigkeit (Hygroskopizität).

In diesem Zusammenhang soll weniger auf die in bestimmten Natursteinsorten vorhandenen Salzgehalte eingegangen werden als vielmehr auf die sogenannten Fremdsalze, die durch äußere Einflüsse in den Baustoff gelangen.

Hierfür gibt es verschiedene Ursachen. So enthalten beispielsweise alle technisch verwendeten Brennstoffe in irgendeiner Form Schwefel, der bei Verbrennung Oxide bildet. Bei schwerem Heizöl beträgt der Schwefelanteil etwa 3 bis 4% und bei Steinkohle ca. 1%. Während des Verbrennungsvorganges wird die Hauptmenge des Schwefels in Schwefeldioxid, und ein bestimmter Anteil auch in Schwefeltrioxid umgewandelt, wobei Schwefeltrioxid in Verbindung mit einer relativ hohen Luftfeuchtigkeit zur Bildung von Schwefelsäure führt. Die Schwefelsäure zersetzt sehr rasch die Carbonate, also die Bindemittel des Mörtels, der Kalkanstriche, des Betons und der Natursteine. Dabei wird Kalziumcarbonat (Kalk) in Kalziumsulfat (Gips) umgesetzt. Im Ergebnis führt dieses zu einer erheblichen Verminderung der Festigkeit.

Die an sich wünschenswerte Entfernung der Salzanteile aus dem Mauerwerk ist sehr aufwendig. Entweder muß die gesamte versalzene Zone der Wand in einem Maueraustauschverfahren ersetzt werden oder es müssen Segment für Segment Entsalzungen dadurch vorgenommen werden, daß stark saugfähige Kompressen angelegt und das Mauerwerk mit Wasser über einen längeren Zeitraum so lange durchspült wird, bis das gesamte Salz aus dem Mauerwerk ausgewaschen ist. Solche Arbeitsgänge sind verständlicherweise extrem aufwendig und kommen in der Praxis nur dann zur Anwendung, wenn es sich um unwiederbringliche Kunstschätze handelt, die dann entsprechend aufwendig behandelt und saniert werden können. Im Normalfall jedoch müssen einfachere Methoden angewendet werden, um die Schädlichkeit der Salze zu vermindern. Dies geschieht vornehmlich dadurch, daß die ganz allgemein wasserlöslichen bauschädlichen Salze in schwer- oder unlösliche Produkte umgewandelt werden und so ihre Wanderung unterbunden wird. Dies ist beispielsweise für die leicht löslichen Sulfat- und Chloridverbindungen möglich, die dann in schwer- bzw. unlösliche Verbindungen überführt werden. Hierfür bietet sich eine chemische Behandlung des Mauerwerks mit einer Lösung an, die Bleihexafluorsilikat als Wirkstoff enthält. Bleihexafluorsilikat reagiert mit den Sulfat- und Chloridverbindungen in komplexer Reaktion unter Bildung verschiedener Produkte, die nahezu alle schwer- oder unlöslich sind.

Besondere Bedeutung kommt der Salzumwandlung in Bezug auf die Anwendung porenhydrophober Sanierputze zu, da diese Sanierputze im frisch aufgebrachten Zustand noch nicht hydrophob sind und die Salze deshalb problemlos in den Sanierputz einwandern können. Um dies zu verhindern, wird häufig eine Putzgrundvorbehandlung mit Bleihexafluorsilikat empfohlen. Dabei ist von Nachteil, daß hierfür giftige Bleiverbindungen Verwendung finden müssen, die mit zunehmendem Umweltbewußtsein kaum noch zugelassen werden dürften.

Die darüber hinaus bekannte Vorimprägnierung des Mauerwerks, die das Einwandern von Anmachwasser in das Mauerwerk reduziert, hat den erheblichen Nachteil, daß die Putzhaftung negativ beeinflußt wird.

Da es keine schwer- oder unlöslichen Nitratverbindungen gibt, scheidet die weiter oben beschriebene Umwandlung in schwer- oder unlösliche Verbindungen für den Nitratanteil aus. Hier wird häufig nach einer Tränkung mit Bleihexafluorsilikatlösung eine weitere Behandlung mit einer festigenden und hydrophobierenden Substanz vorgenommen, die dann im Bereich der Eindringtiefe durch die hydrophobierende Wirkung die Wanderungsgeschwindigkeit der Nitratverbindungen einschränkt. Ist die Salzkonzentration im Mauerwerk jedoch sehr hoch, kann es zu einer entsprechenden Belastung der hydrophobierten Grenzschicht kommen. Die dort in größerer Konzentration abgelagerten Salze sind unter Umständen in der Lage, durch ihren Kristallisations- und Hydrationsdruck die imprägnierte Zone abzustoßen. Außerdem ist es erforderlich, daß sofort nach der Imprägnierung der Spritzbewurf aufgebracht wird, weil nach Einstellen der Hydrophobie Haftungsprobleme an der Oberfläche beim Aufbringen des Spritzbewurfs bzw. des neuen Oberputzes zu erwarten sind.

Auf den Spritzbewurf, der im allgemeinen netzartig aufgebracht wird, wird dann häufig zur Erzielung eines geometrischen Ausgleichs ein sogenannter Ausgleichsputz aufgetragen, der im wesentlichen die gleiche Zusammensetzung wie der anschließend aufzubringende Sanierputz aufweist und der dem geometrischen Ausgleich von Unebenheiten dient.

Die entscheidende Eigenschaft des Sanierputzes sind hohe Porosität und Wasserdampfdurchlässigkeit bei gleichzeitig erheblicher Verminderung der kapillaren Leitfähigkeit. Durch die Kombination von stark reduzierter kapillarer Leitfähigkeit und hoher Wasserdampfdurchlässigkeit gelingt es, die Verdunstungszone des Wassers von der Oberfläche in die tieferen Schichten zu verlagern. Dadurch wird auch die Kristallisation der im Mauerwerk befindlichen Restsalze in diese Schichten verlagert. Es entsteht eine trockene, salzfreie Oberfläche, die als Träger für Anstriche geeignet ist. Wegen der günstigen Porengeometrie - verglichen mit herkömmlichen Putzen - erhöht sich die Lebensdauer des Sanierputzes auf versalzenem Mauerwerk um ein Vielfaches. Durch die verzögerte Salzeinwanderung wird auch die hygroskopische Feuchtigkeitsaufnahme im Putzbereich reduziert, d. h. es entsteht eine optisch trockene Oberfläche, obwohl das Mauerwerk nach wie vor eine gewisse Feuchtigkeit und einen gewissen Salzgehalt besitzt. Außerdem läßt der Pufferputz aufgrund seiner besonderen Porengeometrie eine höhere Salzeinwanderung zu als die bisher bekannten Sanierputze. Damit wird die Lebensdauer solcher Putz-Systeme bei stark salzhaltigen Mauerwerken erheblich verlängert.

Aus der DE-PS 1 803 381 ist eine Mischung für einen der Wärmedämmung dienenden sogenannten Isolierputz bekannt, der in einem Arbeitsgang in einer ausreichend dicken Schicht auf eine Wand aufgetragen werden kann und der auf der Basis von umhüllten Schaumstoffteilchen aus Styrolpolymerisaten sowie Zement, Kalk und Zuschlagstoffen aufgebaut ist und Gewichtsanteile von mit gemahlenem vulkanischem Tuffstein beschichteten Schaumstoffteilchen (Polystyrol), gemahlenem Traß, Zement, Kalk und Metallseife enthält. Als Sanierputz ist diese Putz-Mischung, die den oben beschriebenen Anforderungen in keiner Weise gerecht wird, jedoch nicht geeignet.

Aus der FR-A-2 539 788 sind ferner hydrophobierende und wäremedämmende Putze bekannt, die Luftporenbildner (Tenside, sulfoniertes Olefin) und Leichtzuschlagstoffe enthalten.

Aus der DE-AS 1 671 172 ist ein Wandverputz, insbesondere ein Kratzputz, bekannt, der eine wesentlich vereinfachte Herstellung zu verputzender Wandfläche ermöglichen soll. Dieser Putz enthält neben Zement, Kalkhydrat und feinem Splitt auch Natrium-Lauryl-Sulfat, Zinkstearat und Perlite als Wirkstoffe. Auch dieser bekannte Putz ist nicht geeignet, die weiter oben beschriebenen Anforderungen an einen Sanierputz zu erfüllen.

Aus der DD-PS 123 187 ist ein Verfahren zur Hydrophobierung silikatischer Baustoffe unter Verwendung von Metallseifen bekannt. Auch in dieser Veröffentlichung wird auf die weiter oben beschriebenen besonderen Probleme eines Sanierputzes nicht eingegangen.

Aus der FR-PSen 396 694 und 446 375 sind schließlich Mörtel bekannt, die Natriumoleat als Hydrophobierungsmittel enthalten.

Der Erfindung liegt die Aufgabe zugrunde, ein Putz-System zu schaffen, das die umweltbelastenden Nachteile dar Behandlung mit Bleiverbindungen sowie die Haftungsprobleme und die Gefahr des Abstoßens bei den Imprägnierverfahren vermeidet und dennoch die gewünschten Eigenschaften der Sanierputz-Schicht nicht beeinträchtigt.

Die Lösung der Aufgabe erfolgt erfindungsgemäß durch die kennzeichnenden Merkmale des Anspruchs 1.

Aufgrund seiner besonderen Porengeometrie läßt ein solcher Pufferputz eine höhere Salzeinwanderung zu als die bisher bekannten Sanierputze. Die Lebensdauer des vorliegenden Putz-Systems ist damit bei stark salzhaltigen Mauerwerken erheblich größer. Die Hydrophobierungsmittel in der dort beschriebenen Zusammensetzung bewirken, daß der Wasseraufnahmekoeffizient w - gemessen nach DIN 52 617 E - zwischen 1,0 und 2,0 $kg/m^2h^{0,5}$ liegt.

Durch den Anteil an saugfähigen Leichtzuschlägen, die die Porengeometrie des erhärteten Mörtels beeinflussen, kann sich ein hoher Anteil bauschädlicher Salze ablagern. Die offene Porosität beträgt - gemessen nach der Empfehlung Rilem 25-PEM-/I-I - mindestens 35 Volumenprozente.

Vorteilhafte Weiterbildungen ergeben sich aus den Unteransprüchen.

Der Aufbau des Putzsystems wird nachfolgend im einzelnen erläutert.

Nachdem das feuchte und salzverseuchte Mauerwerk gründlich vom alten Putz befreit worden ist und der mürbe Fugenmörtel möglichst tief ausgekratzt wurde, wird zunächst ein spezieller Spritzbewurfmörtel, der auch auf wenig saugenden Steinen gut haftet - nicht voll deckend, sondern warzenförmig - aufgeworfen.

Nach einer Erhärtungszeit von etwa 12 Stunden wird ein leichter, unter Verwendung von Leichtzuschlägen hergestellter chemisch-physikalisch wirksamer Pufferputz aufgebracht, mit dem auch sämtliche ausgekratzten Fugen ausgeworfen werden. Im Gegensatz zu dem später aufzubringenden Sanierputz dürfen in den Pufferputz während der Erhärtungsphase Salze einwandern. Der Pufferputz, der gleichzeitig die Aufgabe eines für einen geometrischen Ausgleich sorgenden Ausgleichsputzes übernimmt, soll an der schwächsten Stelle mindestens 1 cm dick sein. Er wird vorzugsweise als Trockenmörtel angeliefert. Dieser Pufferputz enthält Hydrophobierungsmittel nur in einem solchen Umfang, daß der anschließend aufzubringende - mindestens 1,5 cm dicke - Sanierputz auf diesem Pufferputz gut haftend aufzubringen ist, zum anderen aber das Einwandern von Anmachwasser aus dem Sanierputz in den Pufferputz weitgehend verhindert wird. Zu diesem Zweck wird der Pufferputz mit etwa 0,08 bis 0,2 Gewichtsprozenten, vorzugsweise mit 0,15 Gewichtsprozenten, Natriumoleat als Hydrophobierungsmittel versehen. Um eine ausreichende Luftporenbildung zu erzielen, sind darüber hinaus etwa 0,2 bis 0,5 Gewichtsprozente, vorzugsweise 0,45 Gewichtsprozente, Tenside vorhanden.

Wichtig ist in diesem Zusammenhang eine richtige Abstimmung zwischen Sanierputz und Pufferputz. Bei geringeren oder fehlenden Hydrophobierungsanteilen im Pufferputz muß der Sanierputz mit höheren Anteilen an Wasserrückhaltemitteln versehen werden. Hierzu bieten sich 0,1 bis 0,2 Gewichtsprozente Zelluloseäther, insbesondere Methylzelluloseäther, an. Bei richtiger Dosierung führen diese Zusätze zu einer Verbesserung der Verarbeitungseigenschaften, die sich jedoch bei zu hoher Dosierung wieder verschlechtern.

Der Anteil der Leichtzuschlagstoffe, beispielsweise Perlite, sollte bei etwa 15 Gewichtsprozenten liegen. Ein höherer Anteil an Leichtzuschlagstoffen ist ungünstig, da dann die Festigkeitin des erhärteten Putzes zu starken Schwankungen unterliegen. Bevorzugte Korngrößen für die Leichtzuschlagstoffe sind 0 bis 3 mm. Darüber hinaus werden etwa 20 bis 30%, vorzugsweise 25, Gewichtsprozente Sande (Kalksteinbrechsande), etwa 5 Gewichtsprozente Kalksteinmehl (Füller) und etwa 50 bis 60 Gewichtsprozente Zement nach DIN 1164 zugesetzt.

Dieser Pufferputz kann gleichzeitig die Aufgabe eines geometrischen Ausgleichsputzes übernahmen. Er soll an der schwächsten Stelle mindestens 1 cm dick sein. Eine solche Mindestdicke ist erforderlich, um die gewünschte Pufferwirkung (Salzeinwanderung) noch zu gewährleisten.

Bei einem Fehlen einer Hydrophobierung des Pufferputzes wäre ein gründliches Annässen vor Aufbringen des Sanierputzes erforderlich, was wiederum den Nachteil hätte, daß die unerwünschte Einwanderung von Salzen in den Sanierputz dadurch gefördert würde.

Der Pufferputz enthält Hydrophobierungsmittel nur in einem solchen Umfang, daß der anschließend aufzubringende - mindestens 1,5 cm dicke - Sanierputz auf dem Pufferputz gut haftend aufzubringen ist, andererseits aber dem Sanierputz nur soviel Anmachwasser entzogen wird, daß dessen Erhärtung nicht negativ beeinflußt wird. Die Beigabe von Hydrophobierungsmitteln zum Pufferputz hat weiterhin die Aufgabe, diesen für die Anwendung im Sockelbereich frostsicherer zu machen. Der Pufferputz mit seinen Perlitanteilen und Zusatzmitteln kann in einem Arbeitsgang den jeweiligen geometrischen Erfordernissen entsprechend in wechselnden Putzdicken von 1 bis 4 cm aufgebracht werden, ohne daß die Gefahr von Rißbildungen besteht.

Die bisher erforderlichen Verfahren zur Salzbehandlung (Salzumwandlung) als zusätzliche Putzgrund-Vorbehandlung, die mit erheblichen Umweltproblemen behaftet waren, können beim oben beschriebenen Putz-System entfallen. Der Pufferputz macht das bisher angebotene Sanierputzsystem in Bezug auf die langfristige Haltbarkeit noch wirksamer und sicherer, da durch den Pufferputz die frühzeitige Salzeinwanderung in den Sanierputz verhindert wird. Die Kombination Pufferputz/Sanierputz läßt die Salzeinwanderung bis zur Sättigung des Porenraumes in die erhärteten Mörtel in weit höherem Maße zu, als dies bei den bekannten Sanierputzen der Fall ist.

**Patentansprüche**

1. Putz-System, bestehend aus einer auf das Mauerwerk aufgetragenen Spritzbewurfmörtel-Schicht und einer Sanierputz-Schicht, dadurch gekennzeichnet, daß zwischen diesen beiden Schichten als Pufferputz eine Putz-Zwischenlage mit 0,05 bis 0,15 Gewichtsprozenten Natriumoleat als Hydrophobierungsmittel sowie mit 0,2 bis 0,5 Gewichtsprozenten Tensiden als Luftporenbildner vorhanden ist, wobei die Dicke des Pufferputzes mindestens 1 cm und die Dicke des Sanierputzes mindestens 1,5 cm beträgt.

2. System nach Anspruch 1, dadurch gekennzeichnet, daß 0,08 Gewichtsprozente Natriumoleat als Hydrophobierungsmittel im Pufferputz vorhanden sind.

3. System nach einem der Ansprüche 1 oder 2, dadurch gekennzeichnet, daß 0,45 Gewichtsprozente Tenside als Luftporenbildner im Pufferputz vorhanden sind.

4. System nach einem der Ansprüche 1 bis 3, dadurch gekennzeichnet, daß 0,1 bis 0,2 Gewichtsprozente Zelluloseäther, insbesondere Methylzelluloseäther, zur Wasserrückhaltung und als Verarbeitungshilfe im Sanierputz enthalten sind.

5. System nach einem der Ansprüche 1 bis 4, dadurch gekennzeichnet, daß etwa 15 Gewichtsprozente Leichtzuschlagstoffe, insbesondere Perlite, mit einer Korngröße von 0 bis 3 mm im Pufferputz vorhanden sind.

6. System nach einem der Ansprüche 1 bis 5, dadurch gekennzeichnet, daß darüber hinaus etwa 20 bis 30, vorzugsweise 25, Gewichtsprozente Sande (Kalksteinbrechsande), 5 Gewichtsprozente Kalksteinmehl (Füller) und etwa 50 bis 60 Gewichtsprozente Zement nach DIN 1164 im Pufferputz vorhanden sind.

## Claims

1. Plaster system consisting of a coarse plaster layer applied onto the masonry and a finishing plaster layer, characterised thereby, that between these two layers, there is present an intermediate plaster layer as buffer plaster with 0.05 to 0.15% by weight of sodium moleate as hydrophobing agent as well as with 0.2 to 0.5% by weight of surface-active agents as former of air pores, wherein the thickness of the buffer plaster amounts to at least 1 centimetre and the thickness of the finishing plaster amounts to at least 1.5 centimetres.

2. System according to claim 1, characterised thereby, that 0.08% by weight of sodium moleate is present as hydrophobing agent in the buffer plaster.

3. System according to one of the claims 1 and 2, characterised thereby, that 0.45% by weight of surface-active agents is present as former of air pores in the buffer plaster.

4. System according to one of the claims 1 to 3, characterised thereby, that 0.1 to 0.3% by weight of cellulose ether, in particular methyl cellulose ether are contained for water retention and as processing aid in the finishing plaster.

5. System according to one of the claims 1 to 4, characterised thereby, that about 15% by weight of lightweight aggregates, in particular perlite, with a grain size of 0 to 3 millimetres are present in the buffer plaster.

6. System according to one of the claims 1 to 5, characterised thereby, that about 20 to 30%, preferably 25% by weight of sands (broken limestone sands), 5% by weight of limestone meal (filler) and about 50 to 60% by weight of cement according to German Industrial Standard 1164 are present beyond that in the finishing plaster.

## Revendications

1. Système d'enduits, composé d'une couche de mortier projeté sur le mur et d'une couche d'enduit d'assainissement *caractérisé par* une couche intermédiaire, prévue entre les deux couches indiquées, servant d'enduit tampon, comprenant de 0,05% à 0,15% en poids d'oléates de sodium en tant qu'imperméabilisant et de 0,2% à 0,5% en poids d'agents tensio-actifs en tant qu'agent porogène, l'épaisseur dudit enduit tampon étant d'au moins 1 cm et celle de l'enduit d'assainissement d'au moins 1,5 cm

2. Système selon la revendication 1 *caractérisé en ce que* l'enduit tampon comprend 0,08% en poids d'oléate de sodium en tant qu'imperméabilisant.

3. Système selon les revendications 1 et 2 *caractérisé en ce que* l'enduit tampon comprend 0,45% en poids d'agents tensio-actifs en tant qu'agent porogène.

4. Système selon l'une des revendications 1 à 3 *caractérisé en ce que* l'enduit d'assainissement comprend de 0,1% à 0,2% en poids d'éther cellulosique, en particulier d'éther de méthyle cellulosique, en tant que moyen de rétention de l'humidité et auxiliaire de traitement.

5. Système selon l'une des revendications 1 à 4 *caractérisé en ce que* l'enduit tampon comprend environ 15% en poids d'agrégats légers, en particulier de perlites, de grosseur de grain comprise entre 0 et 3 mm.

6. Système selon l'une des revendications 1 à 5 *caractérisé en ce que* l'enduit tampon comprend environ 20% à 30% en poids, de préférence 25%, de sable (sable calcaire), 5% en poids de chaux pulvérisée (remplissage) et environ 50% à 60% en poids de ciment selon la norme DIN 1164.